(19) Europäisches Patentamt

European Patent Office

Office européen des brevets

(11) Publication number: **0 318 237 B1**

## EUROPEAN PATENT SPECIFICATION

(45) Date of publication of patent specification: **17.06.92**　(51) Int. Cl.⁵: **A22C 11/02**, A22C 11/00

(21) Application number: **88311025.6**

(22) Date of filing: **22.11.88**

(54) **Packaging system.**

(30) Priority: **27.11.87 GB 8727808**

(43) Date of publication of application:
**31.05.89 Bulletin 89/22**

(45) Publication of the grant of the patent:
**17.06.92 Bulletin 92/25**

(84) Designated Contracting States:
**AT BE CH DE ES FR GB GR IT LI LU NL SE**

(56) References cited:
**EP-A- 16 500**　　**EP-A- 123 932**
**DE-A- 3 248 338**　**FR-A- 1 395 140**
**FR-A- 1 577 771**　**FR-A- 2 111 821**
**GB-A- 2 077 244**　**NL-A- 6 406 057**
**US-A- 3 150 410**　**US-A- 3 672 001**

(73) Proprietor: **DEVRO, INC.**
**Loeser Avenue P.O. Box 858**
**Somerville New Jersey 08876(US)**

(72) Inventor: **Hanlon, Allan James**
**Rubislaw 127 Henderson Street Bridge of**
**Allen**
**Stirling, FK9 4RO Scotland(GB)**

(74) Representative: **Jones, Alan John et al**
**CARPMAELS & RANSFORD 43 Bloomsbury**
**Square**
**London, WC1A 2RA(GB)**

EP 0 318 237 B1

## Description

This invention relates to a packaging system for shirred sticks of sausage casing and to a method of transferring such sticks from a shirring machine to a stuffing machine.

Shirred sticks of sausage casing produced, for example by the machine described and illustrated in our European Patent Application No. 0159159 are normally placed in a box manually and then when the box is opened to enable the shirred casings to be stuffed with sausage meat, the sticks are individualy removed, again manually, and applied to the stuffing horn.

The manual handling of these sticks sometimes leads to damage to the sticks, particularly where the sticks are of considerable length.

There is a requirement for longer sticks, because by increasing the length of a stick it is possible to provide a more efficient filling process. Although the rigidity of a longer stick helps in transport, rigidity is liable to detract from the "run-out" property of the slug where ease of movement is needed.

It is an object of the present invention to provide a packaging system and a method of transfer of slugs which will eliminate or substantially eliminate any manual handling of the slugs.

From one aspect of the invention, there is a shirred sausage casing stick packaging system comprising a package in which the sticks are individually supported and separated from each other in such a way that they can readily be released from the packaging and fed to a stuffing machine individually.

Preferably the packaging system takes the form of a magazine with individual compartments for the shirred sticks.

In one particular arrangement the packaging comprises a roll of plastic sheet material formed with individual 'U' shaped depressions or troughs adapted to receive the shirred sticks.

With the shirred sticks in place, in the plastic sheeting the sheeting may be rolled up for transport and may then be enclosed in a foil outer casing or bag.

In another arrangement the sticks are placed in individual compartments in a magazine which can then be mounted on a rotatable arbor and moved round in steps so as to bring the individual compartments into line with the stuffing horn during the stuffing operation.

If desired, in either case, the sticks in their troughs or individual compartments may be retained in position by an easily removable adhesive cover sheet.

In an alternative form of the invention, the plastic sheet is corrugated and the sticks may be retained on alternate sides of the sheet in adjacent corrugations. Alternatively a honeycombed type structure may be used with the sticks retained in the individual channels in the honeycombe.

In each case provision may be made for delivering the sticks one at a time to the stuffing machine.

The package of shirred sticks may be retained in a foil or plastics material bag, so that the sticks are kept fresh and humidity is controlled within the bag. The foil bag may have an exit in the form of a slot with sealing means running the length of the slot so that the individual shirred sticks may be ejected through the seal when required to be fed to the stuffing machine.

In yet a further arrangement the slugs may be retained individually between multiple layers or sheets, and the whole assembly formed into a package contained within a foil bag or enclosure.

From another aspect the invention relates to a method of transferring shirred sticks of sausage casing from a shirring machine to a stuffing horn without manual handling, thus avoiding damage to the slug. The method comprises automatically feeding the shirred sticks from the shirring machine directly into compartments, troughs or similar recesses in a container which retains the sticks in position, separated individually from each other, and then dispensing the sticks automatically one at a time to a stuffing machine.

From another aspect of the invention, there is a machine for packaging shirred sticks of sausage casing, the machine comprising:-

a tray along which an elongated length of packaging material may be progressed, the packaging material comprising a series of troughs adapted to receive individual sticks of the sausage casing;

means for feeding the sticks, one at a time, into the troughs; and

means for indexing the packaging materials so as to move it along, one trough at a time.

The means for feeding the sticks into the trough may comprise a rotatable cylindrical feeder having one open end into which a stick of casing may be inserted, said feeder also having an open side so that when it is inverted the stick will fall out into a trough.

The means for indexing the packaging material may comprise a shoe adapted to engage the underside of a trough and means may be provided for moving the shoe both vertically and laterally.

The machine may also include means for unloading the package of material and for transferring the individual shirred sticks to a stuffing machine.

Preferably said means for unloading the packaging material comprises a device for rotating the package so that its open side is downward so that individual sticks fall out of the package and into a receptacle, said receptacle having means to move it laterally of the package so as to push the released shirred stick onto a projecting part of a stuffing machine.

In the accompanying drawings:-

Figure 1 is a view from above of a section of plastic strip with troughs formed in it, adapted to receive sticks of shirred sausage casing;

Figure 2 shows the plastic strip with its troughs in the process of being filled with finished shirred sticks derived from a shirring machine;

Figure 3 illustrates the method of transferring the shirred sticks from the plastic strip container to a stuffing machine;

Figure 4 is a plan view of part of a tray along which the packaging material is to be progressed, and shows in dotted lines the indexing mechanism for moving the packaging material along the tray;

Figure 5 is a section on the line X-X shown in Figure 4;

Figure 6 is an end elevation seen from the right hand end of Figure 4; and

Figure 7 is an underplan of the indexing mechanism shown in the other Figures.

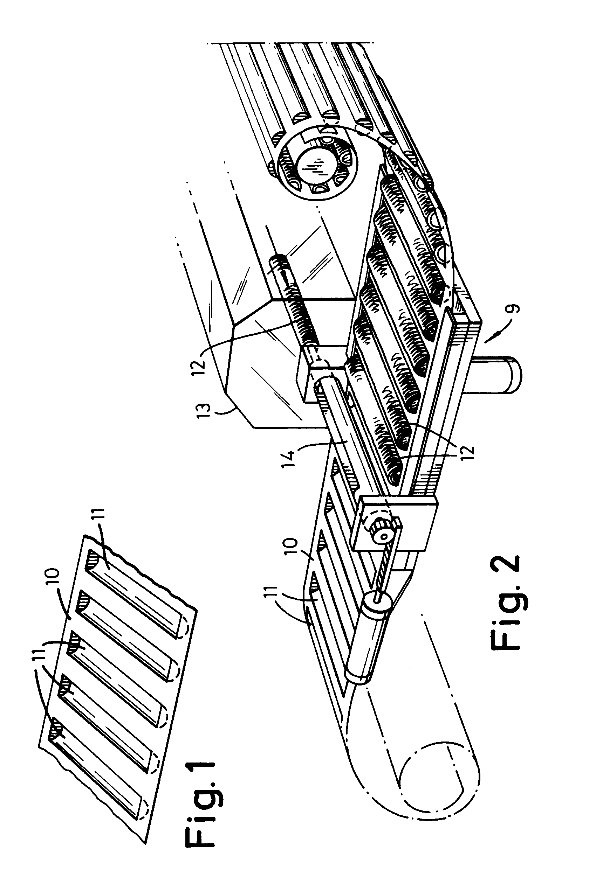

In Figure 1 is shown a short length of plastic sheet material which may form part of a plastic roll, the sheet material 10 being formed with "U"-shaped depressions 11 having a width of the diameter of the sticks or slugs of shirred sausage casing which are to be transported, and having a length which is the length of the slug. The distance between centres of adjacent depressions or troughs may be 1.5 x slug diameter. As illustrated in Figure 2 a slug 12 is ejected from a shirring machine 13 automatically into a retaining device 14, to be described in more detail later, which is then rotated to release the slug and allow it to drop into one of the depressions or troughs 11 in the sheet 10.

The sheet is indexed forward to the next depression to allow the next ejected slug or stick to be inserted into the next depression or trough. The sheet may if desired be sealed by a foil layer to control humidity within the package or it may be left open. As illustrated the sheet at this stage is rolled with the open side of the depression facing inwardly. The completed roll may then be bagged in a foil container, and the foil container may have a sealed slot in it through which the slugs may be ejected.

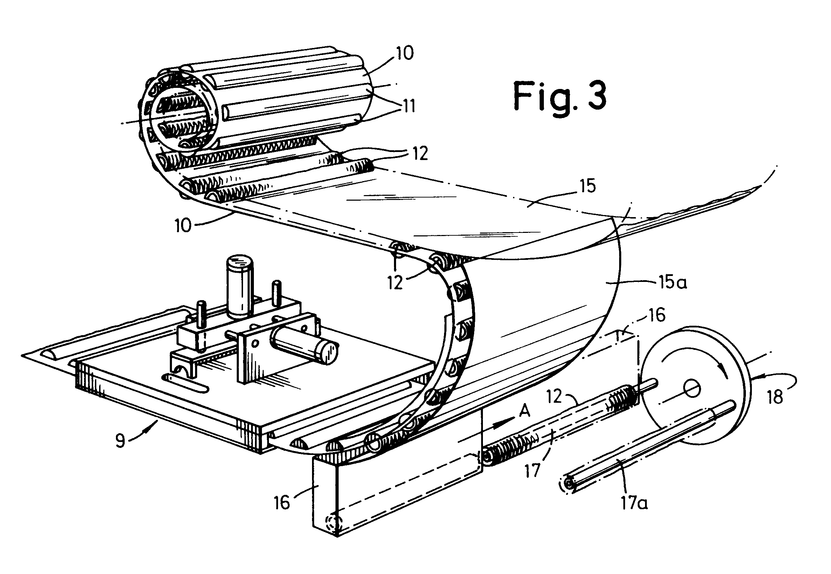

The completed roll or magazine of slugs is then transported in its sealed foiled container to a stuffing machine. As shown in Figure 3 the roll is then opened up and, if a backing sheet is used as illustrated at 15, the backing sheet 15 is removed and individual slugs retained by guide sheet 15a and then ejected as shown by bending the roll so that its natural bending movement ejects the slug into a receptacle 16 from which it may be automatically transferred to a stuffing horn 17 of a stuffing machine 18, by moving the receptacle in the direction of arrow A in Fig. 3.

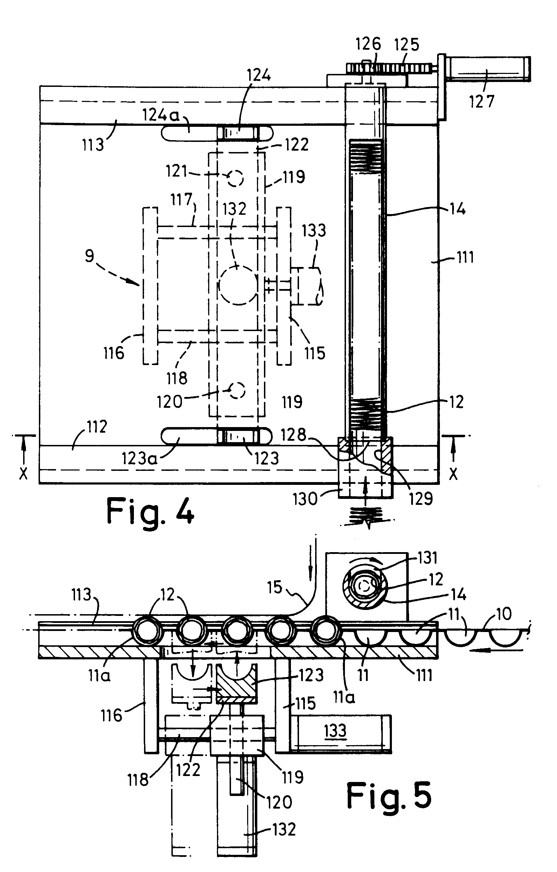

The receptacle 16 is then returned to its original position and the horn 17 rotated by the position 17A ready to fill the stick 12 of shirred casing. In both Fig. 2 and Fig. 3 the roll may be moved in steps by an indexing mechanism, shown generally at 9, which will be described in more detail in relation to Figs. 4 and 7.

By taking the plastic sheets around a tight reverse radius the slug is ejected automatically ready for use.

The rolls might for example hold between 50 and 1,000 slugs. The large number of slugs would enable a sustained production run to continue with long slugs thus greatly improving efficiency of operations.

The plastic sheet used may be polypropylene sheet or PVC or styrene. It may for example be of the order of 200 microns thickness.

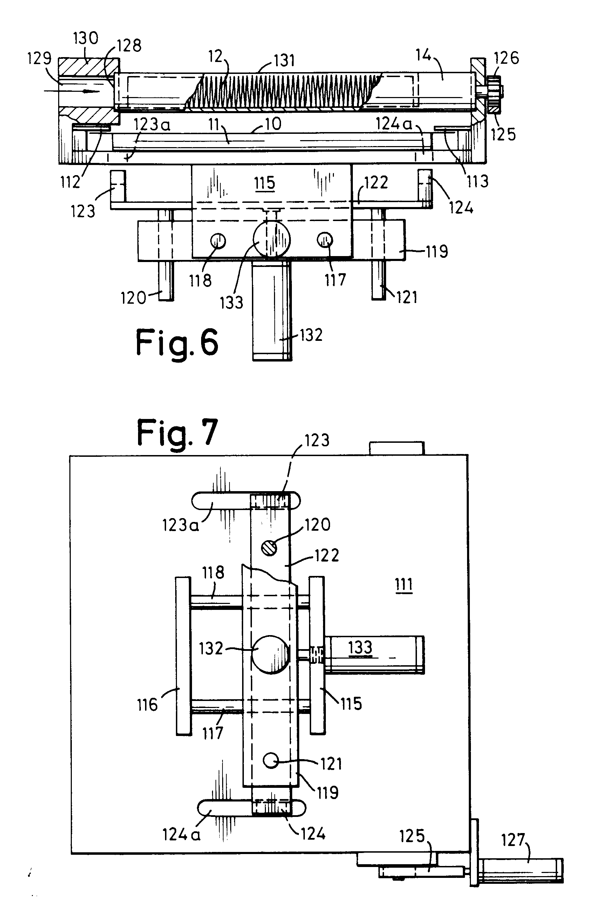

The above description and drawings show the principles of the invention clearly. The more practical arrangement, which may be used in the machine as described above is shown in Figures 4 to 7.

A tray along which the packaging material is to be progressed comprises a base plate 111 and two guide flanges 112 and 113 adapted to retain the packaging material on the base plate as it moves along the tray.

Sticks of shirred material are fed into the troughs of the packaging material by means of a rotatable cylindrical feeder 14, adapted to be rotated through 180° by means of a rack 125 and pinion 126, the rack being moved by a hydraulic cylinder 127.

The cylinder 14 is open at its end 128 so that sticks of shirred material may be inserted through a bore 129 in a supporting block 130 and into the rotatable cylinder 14.

The cylinder also has an open side 131 so that when the cylinder is inverted a stick of shirred material will drop out into the adjacent trough 11 of the packaging material 10 (see Fig. 5). In Figure 5 is seen empty troughs 11 and filled troughs 11a containing shirred sticks 12.

The indexing mechanism 9 for moving the packaging material along both in the mechanism of Fig. 2 and that of Fig. 3 is shown below a base plate 111 of the tray. The mechanism is supported between end plates 115 and 116. Two horizontal support rods 117 and 118 have slidably mounted on them a lateral cross bar 119 which itself supports, via two vertical guide rods 120 and 121, a cross beam 122 at the ends of which are mounted indexing means in the form of shoes 123 and 124. As seen in Figure 5 shoes 123 and 124 are shaped so as to project through slots 123a and 124a to engage the underside of a trough 11a of the packaging material 10.

Two hydraulic cylinders 132 and 133 are provided, cylinder 133 being used to move the cross bar 119 and therefore the shoes 123 and 124 from right to left as seen in Figure 5 and cylinder 132 being arranged to raise and lower the crossbeam 122 together with the shoes 123 and 124. The mechanism works by first raising the shoes 123 and 124 so that they engage one of the troughs 11a of the packaging material and then operating the cylinder 133 so as to move the troughs along from right to left in Figure 5 thus indexing the packaging material along so that the next trough 11 is located in the proper position to receive a shirred stick 12.

The shoes are then lowered and returned to their original position while operating the hydraulic cylinders in the reverse order.

The indexing mechanism 9 shown in detail in Figures 4 to 7 is shown in Figure 2 with the feeding mechanism 14 in its operative position. However, the same indexing mechanism 9 is shown in Figure 3 inverted and without the feeding mechanism 14 where the unit is adapted for use when transferring the shirred sticks to a stuffing machine.

By use of this invention the slugs do not get damaged during handling, and need not be touched by human hand at any stage. The fact that the slugs are kept at constant humidity even in very dry or very humid conditions, and the fact that the slugs are kept free from dust etc. are additional advantages.

**Claims**

1. A shirred sausage casing stick packaging system comprising a package in which the sticks are individually supported ano separated from each other in such a way that they can readily be released from the packaging and fed to a stuffing machine individually.

2. A packaging system according to claim 1, in the form of a magazine with individual compartments ior the shirred sticks.

3. A packaging system according to claim 1 or claim 2 comprising a roll of plastic sheet material formed with individual 'U' shaped depressions or troughs adapted to receive the shirred sticks.

4. A packaging system according to claim 1 comprising a magazine having individual compartments adapted to receive said sticks, the magazine being arranged to be mounted on a rotatable arbor and moved round in steps so as to bring the individual compartments into line with a stuffing horn during the stuffing operation.

5. A packaging system according to any of claims 1 to 4 and in which the sticks in their troughs or individual compartments are retained in position by an easily removable adhesive cover sheet.

6. A packaging system according to claim 5 when appended to claim 3 and in which the plastic sheet is corrugated and the sticks are retained on alternate sides of the sheet in adjacent corrugations.

7. A packaging system according to claim 1 comprising a honeycombed type structure with the sticks retained in the individual channels in the honeycomb.

8. A packaging system according to any preceding claim including means for delivering the sticks one at a time to the stuffing machine.

9. A packaging system according to any preceding claim and in which the package of shirred sticks is retained in a foil or plastics material bag, so that the sticks are kept fresh and humidity is controlled within the bag.

10. A packaging system according to claim 8 and in which the bag has an exit in the form of a slot with sealing means running the length of the slot so that the individual shirred sticks may be ejected through the seal when required to be fed to the stuffing machine.

11. A method of transferring shirred sticks of sausage casing from a shirring machine to a stuffing horn without manual handling thus avoiding damage to the slug, the method comprising automatically feeding the shirred sticks from the shirring machine directly into compartments, troughs or similar recesses in a container which retains the sticks in position, separated individually from each other, and then dispensing the sticks automatically one at a time to a stuffing machine.

12. A machine for packaging shirred sticks of sausage casing, the machine comprising:-
   a tray along which an elongated length of packing material may be progressed, the packaging material comprising a series of troughs adapted to receive individual sticks of the sausage casing,

means for feeding the sticks, one at a time, into the troughs, and

means for indexing the packaging materials so as to move it along, one trough at a time.

13. A machine according to claim 12 and in which the means for feeding the sticks into the trough comprises a rotatable cylindrical feeder having one open end into which a stick of casing may be inserted, said feeder also having an open side so that when it is inverted the stick will fall out into a trough.

14. A machine according to claim 12 or claim 13 and in which the means for indexing the packaging material may comprise a shoe adapted to engage the underside of a trough and means are provided or moving the shoe both vertically and laterally.

15. A machine according to claim 12, 13 or 14 including means for unloading the package of material and for transferring the individual shirred sticks to a stuffing machine.

16. A machine accoroing to claim 15 and in which said means for unloading the packaging material comprises a device for rotating the package so that its open side is downward so that individual sticks fall out of the package and into a receptacle, said receptacle having means to move it laterally of the package so as to push the released shirred stick into a projecting part of a stuffing machine.

**Revendications**

1. Un dispositif d'emballage de bâtonnets d'enveloppe de saucisse caoutchoutés comprenant un emballage dans lequel les bâtonnets sont soutenus individuellement et séparés les uns des autres de telle sorte qu'ils puissent facilement être enlevés de l'emballage et alimentés dans une machine de poussage en boyau de façon individuelle.

2. Un dispositif d'emballage selon la revendication 1, sous forme d'un récepteur avec des compartiments individuels pour les bâtonnets caoutchoutés.

3. Un dispositif d'emballage selon la revendication 1 ou la revendication 2 comprenant un rouleau de matériau en feuille plastique formé avec des godets ou creux individuels en forme de U adaptés pour recevoir les bâtonnets caoutchoutés.

4. Un dispositif d'emballage selon la revendication 1 comprenant un récepteur ayant des compartiments individuels adaptés pour recevoir lesdits bâtonnets, le récepteur étant disposé pour être monté sur un arbre rotatif et déplacé autour graduellement afin d'amener les compartiments individuels en alignement avec une tige de poussage en boyau pendant l'opération de poussage enboyau.

5. Un dispositif d'emballage selon l'une des revendications 1 à 4 et dans lequel les bâtonnets dans leur creux ou godets individuels sont maintenus en position par une feuille d'emballage adhésive détachable.

6. Un dispositif d'emballage selon la revendication 5 lorsque jointe à la revendication 3 et dans lequel la feuille plastique est ondulée et les bâtonnets sont maintenus de façon alternative d'un coté ou de l'autre de la feuille dans les ondulations adjacentes.

7. Un dispositifd'emballage selon la revendication 1 comprenant une structure de type nid d'abeille, les bâtonnets étant maintenus dans les canaux individuels dans le nid d'abeille.

8. Un dispositif d'emballage selon l'une des revendications précédentes comprenant des moyens pour distribuer les bâtonnets un par un dans la machine de poussage en boyau.

9. Un dispositif d'emballage selon l'une des revendications précédentes dans lequel l'emballage de bâtonnets caoutchoutés est maintenu dans un sac en matériau plastique ou en feuille afin que les bâtonnets restent frais et que l'humidité soit contrôlée dans le sac.

10. Un dispositif d'emballage selon la revendication 8 et dans lequel le sac a une sortie sous forme d'une fente, des moyens de scellage s'étendant le long de la longueur de la fente afin que les bâtonnets caoutchoutés individuels puissent être éjectés au travers du scellage lorsqu'ils doivent être alimentés vers la machine de poussage en boyau.

11. Un procédé pour transférer des bâtonnets caoutchoutés d'enveloppe de saucisse d'une machine pour caoutchouter vers une tige de poussage en boyau sans manipulation manuelle, évitant ainsi d'endommager la garniture, la méthode comprenant l'alimentation automatique des bâtonnets caoutchoutés de la machine pour caoutchouter directement dans les compartiments, creux ou renfoncements similaires dans un récipient qui maintient les bâtonnets en place, séparés individuellement les uns des autres, et ensuite la distribution automatique des bâtonnets un par un dans une machine de poussage en boyau.

12. Une machine pour emballer des bâtonnets caoutchoutés d'enveloppe de saucisse, la machine comprenant :
un plateau le long duquel on peut faire avancer une longueur allongée de matériau d'emballage, le matériau d'emballage comprenant une série de creux adaptés pour recevoir des bâtonnets individuels d'enveloppe de saucisse.
des moyens pour alimenter les bâtonnets, un par un, dans les creux ; et
des moyens pour indexer le matériau d'emballage afin de le déplacer le long des creux un par un.

13. Une machine selon la revendication 12 et dans laquelle les moyens pour alimenter les bâtonnets dans le creux comprennent un alimenteur cylindrique rotatif ayant une extrémité ouverte dans laquelle on peut insérer un bâtonnet d'enveloppe, ledit alimenteur ayant également un côté ouvert afin que lorsqu'il est rétourné, le bâtonnet tombe dans un creux.

14. Une machine selon la revendication 12 ou la revendication 13 et dans laquelle les moyens pour indexer le matériau d'emballage peuvent comprendre un sabot adapté pour enclencher le dessous d'un creux et dans laquelle des moyens sont fournis pour déplacer le sabot à la fois verticalement et latéralement.

15. Une machine selon la revendication 12, 13 ou 14 comprenant des moyens pour décharger l'emballage de matériau et pour transférer les bâtonnets caoutchoutés individuels vers la machine de poussage en boyau.

16. Une machine selon la revendication 15 et dans laquelle ledit moyen pour décharger le matériau d'emballage comprend un dispositif pour faire tourner l'emballage de telle sorte que son côté ouvert soit vers le bas afin que les bâtonnets individuels tombent hors de l'emballage et dans un réceptacle, ledit réceptacle ayant des moyens pour les déplacer littéralement de l'emballage afin de pousser le bâtonnet caoutchouté dégagé dans une partie de projection de la machine de poussage en boyau.

**Patentansprüche**

1. Verpackungssystem für geraffte Wursthüllenstäbe, mit einer Packung, in welcher die Stäbe einzeln abgestützt und voneinander derart getrennt sind, daß sie aus der Packung leicht freigegeben und einzeln einer Stopfmaschine zugeführt werden können.

2. Verpackungssystem nach Anspruch 1 in Form eines Magazins mit einzelnen Abteilen für die gerafften Stäbe.

3. Verpackungssystem nach Anspruch 1 oder Anspruch 2 mit einer Rolle aus Kunststofffolienmaterial, das mit einzelnen U-förmigen Vertiefungen oder Trögen geformt ist, die befähigt sind, die gerafften Stäbe aufzunehmen.

4. Verpackungssystem nach Anspruch 1, mit einem Magazin, das einzelne Abteile zur Aufnahme der Stäbe aufweist, wobei das Magazin so ausgebildet ist, daß es auf einer drehbaren Welle montierbar und in Schritten herumbewegbar ist, um die einzelnen Abteile während des Stopfvorganges mit einem Stopfhorn auszurichten.

5. Verpackungssystem nach einem der Ansprüche 1 bis 4, bei welchem die Stäbe in ihren Trögen oder einzelnen Abteilen durch eine leicht entfernbare klebende Abdeckfolie in Position gehalten sind.

6. Verpackungssystem nach Anspruch 5, rückbezogen auf Anspruch 3, bei welchem die Kunststoffolie gewellt ist und die Stäbe auf abwechselnden Seiten der Folie in benachbarten Wellungen gehalten sind.

7. Verpackungssystem nach Anspruch 1 mit einer bienenwabenartigen Struktur, wobei die Stäbe in den einzelnen Kanälen der Bienenwabe gehalten sind.

8. Verpackungssystem nach einem der vorhergehenden Ansprüche, mit Mitteln zum Abgeben jeweils eines der Stäbe an die Stopfmaschine.

9. Verpackungssystem nach einem der vorhergehenden Ansprüche, bei welchem die Packung von gerafften Stäben in einem Foliensack oder einem Kunststoffmaterialsack gehalten ist, so daß die Stäbe frisch gehalten sind und die Feuchtigkeit innerhalb des Sackes kontrolliert ist.

10. Verpackungssystem nach Anspruch 8, bei welchem der Sack einen Ausgang in Form eines Schlitzes mit Abdichtungsmitteln aufweist, die entlang des Schlitzes verlaufen, so daß die einzelnen gerafften Stäbe durch die Dichtung hindurch ausgestoßen werden können, wenn es erforderlich ist, sie der Stopfmaschine zuzuführen.

11. Verfahren zum Überführen geraffter Stäbe einer Wursthülle aus einer Raffmaschine zu einem Stopfhorn ohne manuelle Handhabung, wobei auf diese Weise eine Beschädigung des Rohlings vermieden wird, wobei das Verfahren das automatische Zuführen der gerafften Stäbe von der Raffmaschine direkt in Abteile, Tröge oder ähnliche Ausnehmungen in einem Behälter umfaßt, welcher die einzeln voneinander getrennten Stäbe in Position hält, und sodann das automatische Abgeben jeweils eines der Stäbe an eine Stopfmaschine.

12. Maschine zum Verpacken geraffter Stäbe einer Wursthülle, wobei die Maschine umfaßt:

eine Rinne, entlang welcher eine langgestreckte Bahn Verpackungsmaterial vorgeschoben werden kann, wobei das Verpackungsmaterial eine Reihe von Trögen aufweist, die befähigt sind, einzelne Stäbe der Wursthülle aufzunehmen,

Mittel zum Zuführen jeweils eines der Stäbe in die Tröge; und

Mitteln zum Indexieren des Verpackungsmaterials, um dieses jeweils um einen Trog weiterzubewegen.

13. Maschine nach Anspruch 12, bei welcher die Mittel zum Zuführen der Stäbe zu den Trögen einen rotierenden zylindrischen Zuführer aufweisen, der ein offenes Ende hat, in welches ein Hüllenstab eingeführt werden kann, wobei der Zuführer auch eine offene Seite hat, so daß beim Umdrehen des Zuführers der Stab heraus in einen Trog fällt.

14. Maschine nach Anspruch 12 oder 13, bei welcher die Mittel zum Indexieren des Verpackungsmaterials einen Schuh aufweisen, der befähigt ist, an der Unterseite eines Troges anzugreifen, und Mittel vorgesehen sind, um den Schuh sowohl vertikal als auch seitwärts zu bewegen.

15. Maschine nach Anspruch 12, 13 oder 14, mit Mitteln zum Entladen der Packung von Material und zum Überführen der einzelnen gerafften Stäbe zu einer Stopfmaschine.

16. Maschine nach Anspruch 15, bei welcher die Mittel zum Entladen der Packung von Material eine Vorrichtung zum Drehen der Packung aufweisen, so daß ihre offene Seite nach unten gerichtet ist, damit die einzelnen Stäbe aus der Packung und in eine Aufnahme fallen, wobei die Aufnahme Mittel aufweist, um sie bezüglich der Verpackung seitwärts zu bewegen, um die freigegebenen gerafften Stäbe in einen vorspringenden Teil einer Stopfmaschine zu schieben.

Fig. 1

Fig. 2

Fig. 3

EP 0 318 237 B1

Fig. 4

Fig. 5

**Fig. 6**

**Fig. 7**